# EUROPEAN PATENT SPECIFICATION

(11) **EP 3 974 254 B1**
(45) Date of publication and mention of the grant of the patent: **24.12.2025**
(21) Application number: 20841068.8
(22) Date of filing: 14.07.2020
(51) Int. Cl.: B60Q 1/54, B60Q 1/50, B60K 35/28, B60K 35/29, B60Q 9/00, B60Q 1/38, G01C 21/36

(54) **METHOD FOR USING VEHICLE LIGHT TO PROJECT PATTERN, VEHICLE LIGHT SYSTEM, AND VEHICLE**
VERFAHREN ZUR VERWENDUNG EINER FAHRZEUGLEUCHTE ZUR PROJEKTION VON MUSTERN, FAHRZEUGLICHTSYSTEM UND FAHRZEUG
PROCÉDÉ D'UTILISATION D'UN FEU DE VÉHICULE POUR PROJETER UN MOTIF, SYSTÈME DE FEU DE VÉHICULE, ET VÉHICULE

(30) Priority: 15.07.2019 CN 201910634437
(43) Date of publication of application: 30.03.2022
(73) Proprietor: Great Wall Motor Company Limited, Baoding, Hebei 071000 (CN)
(72) Inventor: WANG, Meng, Baoding, Hebei 071000 (CN); LI, Qi, Baoding, Hebei 071000 (CN); LI, Ming, Baoding, Hebei 071000 (CN); YING, Shiming, Baoding, Hebei 071000 (CN); LIU, Yufei, Baoding, Hebei 071000 (CN); FAN, Pengyu, Baoding, Hebei 071000 (CN); AN, Wang, Baoding, Hebei 071000 (CN); TANG, Sai, Baoding, Hebei 071000 (CN); TANG, Jiangsheng, Baoding, Hebei 071000 (CN); DU, Yuejia, Baoding, Hebei 071000 (CN); CHEN, Yanliang, Baoding, Hebei 071000 (CN); LI, Dexiong, Baoding, Hebei 071000 (CN)
(74) Representative: dompatent
(86) International application number: PCT/CN2020/101958
(87) International publication number: WO 2021/008537

(56) References cited:
- EP-A1- 3 401 162
- CN-A- 107 161 076
- CN-A- 108 025 672
- CN-A- 108 569 203
- CN-A- 108 569 207
- CN-A- 108 569 207
- CN-U- 207 773 004
- JP-A- 2008 007 079
- JP-A- 2016 049 891
- US-A1- 2008 225 271
- US-A1- 2017 253 177
- US-A1- 2018 118 099
- US-A1- 2018 261 081

## Description

### Technical Field

The present invention relates to the field of vehicle lights, in particular to a method for using vehicle light to project pattern, a vehicle light system and a vehicle.

### Background Art

At present, in the technical field of vehicle lights, some lights can project the relevant information of the vehicle state and the surrounding environment onto the ground in front of the road through headlights of a vehicle, such as real-time speed, turning sign and the like of the vehicle, so that drivers and pedestrians can obtain the relevant information, thereby ensuring the road safety. However, the relevant information of the vehicle state and the surrounding environment can be projected onto the road surface while a driver drives the vehicle, but the driver and pedestrians cannot obtain the relevant information in real time and intuitively due to numerous projected contents and messy projection modes.

The contents of the background art only relate to the technologies known by the inventors, and do not necessarily represent the prior art in the field.

US 2018/261081 A1 describes an image display device that includes an illuminator and a communicator. The illuminator of US 2018/261081 A1 is configured to send out light on a road surface around a first vehicle as an own vehicle, to display a first notification image on the road surface. In US 2018/261081 A1, the first notification image notifies information to surroundings of the first vehicle. The communicator of US 2018/261081 A1 is configured to perform inter-vehicle communication with a second vehicle other than the first vehicle. The illuminator of US 2018/261081 A1 is configured to display the first notification image on the basis of the inter-vehicle communication performed by the communicator.

US 2017/253177 A1 and US 2018/118099 A1 show further state of the art relevant for the present disclosure.

### Summary of the Invention

In view of at least one defect in the prior art, the present invention provides a method for using vehicle light to project pattern, wherein the method comprises the following steps: receiving information of a pattern to be projected, wherein the information of the pattern to be projected comprises the pattern to be projected and projection priority; and projecting the pattern to be projected onto a projection region of the vehicle lights in front of a vehicle, wherein the pattern to be projected with the highest priority is projected in the case of conflict of a plurality of patterns to be projected.

According to one aspect of the present invention, before receiving the information of the patterns to be projected, the method further comprises the following steps: acquiring the information of the surrounding environment and the vehicle state, judging whether the preset projection conditions are satisfied; and performing the step of receiving the information of the pattern to be projected when judging that the preset projection conditions are satisfied.

According to one aspect of the present invention, the patterns have pattern types with different priorities, wherein the pattern types comprise external person warning signs (turning sign), driving assistance signs (safe distance keeping sign), driver warning signs (speed limit sign) and information signs (real-time speed sign); the priority of the external person warning signs is higher than that of the driving assistance signs; the priority of the driving assistance signs is higher than that of the driver warning signs; and the priority of the driver warning signs is higher than that of the information signs.

Information display category comprises all the information that can be displayed on a dashboard, such as speed and fault codes, and various entertainment signs at the static state of the vehicle, such as logo and custom projection. (Level 4)

According to one aspect of the present invention, the external person warning signs comprise the turning sign and a zebra crossing sign with a certain priority order; and/or the driving assistance signs comprise an acceleration/deceleration reminding sign, a safe distance keeping sign and an obstacle reminding/dodging sign with a certain priority order; and/or the driver warning signs comprise a speed limit sign, a narrow road width sign, a pedestrian and livestock caution sign; and/or the information signs comprise a speed sign, a fault code sign, a LOGO sign and a custom projection sign with a certain priority order.

According to one aspect of the present invention, the projection region of the vehicle lights comprises a middle projection region and a side projection region; the real-time speed sign and the fault code sign are displayed in the side projection region; and the LOGO sign, the custom projection sign, the pedestrian and livestock caution sign, the turning sign, the safe distance keeping sign, the speed limit sign and the obstacle reminding/dodging sign are displayed in the middle projection region.

According to one aspect of the present invention, the projection region of the vehicle lights comprises a left projection region, a right projection region and a middle projection region; the real-time speed signs and fault code signs are displayed in the left projection region or the right projection region; and the LOGO signs, the custom projection signs, the pedestrian and livestock caution signs, the turning signs, the safe distance keeping signs, the speed limit signs and the obstacle reminding/dodging signs are displayed in the middle projection region.

According to one aspect of the present invention, the vehicle lights are configured to project only one pattern at the same moment; and the method further comprises the following steps: receiving information of another pattern to be projected, wherein the information of the pattern to be projected comprises the priority of the pattern to be projected; comparing the priority of the other pattern to be projected with that of the currently projected pattern; if the priority of the other pattern to be projected is higher than that of the currently projected pattern, stopping projecting the currently projected pattern, and projecting the other pattern to be projected.

According to one aspect of the present invention, the vehicle lights are configured to project two or more patterns at the same moment; and the method further comprises the following steps: receiving information of another pattern to be projected, wherein the information of the pattern to be projected comprises the priority and the projection position of the pattern to be projected; determining a projection position of the other pattern to be projected; if the currently projected pattern has been projected onto the projection position of the other pattern to be projected, comparing the priority of the other pattern to be projected with that of the currently projected pattern; if the priority of the other pattern to be projected is higher than that of the currently projected pattern, stopping projecting the currently projected pattern, and projecting the other pattern to be projected.

According to the present invention, the vehicle lights are configured to project two or more patterns at the same moment; the patterns to be projected are projected into the projection region in front of the vehicle; the projection region comprises a middle projection region and a side projection region; and for the two or more patterns projected at the same moment, the pattern with the highest priority is projected onto the middle projection region, while the pattern with the relatively low priority is projected onto the side projection region.

The present invention also relates to a vehicle light system, comprising vehicle lights configured to project different pattern types of patterns in front of the vehicle lights, and a vehicle light controller coupled with the vehicle lights and configured to perform the method described above to control the patterns projected by the vehicle lights.

According to one aspect of the present invention, the vehicle light controller is coupled with a turn signal light controller, a distance sensor, a camera and a speed sensor of a vehicle to respectively receive a turning signal, a safe distance keeping signal, speed limit information and real-time speed information.

The present invention also relates to a vehicle, comprising the vehicle light system described above.

The present invention also relates to a machine-readable storage medium; and instructions are stored in the machine-readable storage medium and are used for enabling a machine to perform the above method for projecting patterns with vehicle lights.

A central processing unit (CPU) is used for running a program; and the program is run to perform the above method of projecting patterns with vehicle lights.

In the embodiments of the present invention, the projection information is effectively classified according to the priority, and the relevant positions of all kinds of projection information in the projection region are planned, so that the information with the highest priority can be presented to the driver of the vehicle and other traffic participants in time. Meanwhile, in the case of parking, zebra crossing, safety belt sign, vehicle LOGO and other custom words and patterns can be dynamically projected in front of the vehicle, so that the driver and other traffic participants can simply and clearly obtain the information of the vehicle state and the surrounding environment, thereby greatly improving the driving safety.

### Brief Description of the Drawings

The present invention will be understood with the accompanying drawings, which form a part of the present invention. Illustrative embodiments of the present invention and descriptions thereof are used for illustrating the present invention, rather than unduly limiting the present invention. In the accompanying drawings,
Figure 1 shows a method for projecting patterns with vehicle lights according to a first embodiment of the present invention;
Figures 2A-2D show examples of projection with a method according to a preferred embodiment of the present invention;
Figures 3A-3C show examples of projection with a method according to a preferred embodiment of the present invention;
Figures 4A-4C show examples of projection with a method according to a preferred embodiment of the present invention;
Figures 5A-5D show examples of projection with a method according to a preferred embodiment of the present invention;
Figures 6A-6C show examples of projection with a method according to a preferred embodiment of the present invention;
Figures 7 and 8 show schematic diagrams of the calculation of a projection region according to a preferred embodiment of the present invention; and
Figure 9 shows a schematic diagram of a vehicle light system according to a preferred embodiment of the present invention.

List of reference numerals:
C represents the nearest point which can be clearly projected by a headlight of a vehicle; F represents the farthest point which can be clearly projected by the headlight; D represents a point nearest to the vehicle, which can be seen by human eyes when a driver drives normally; β represents an angle formed by the road surface and the point nearest to the vehicle that can be seen by human eyes; X refers to a horizontal distance between the human eyes and the vehicle lights when the driver drives normally; L represents the height of human eyes relative to the road surface; L1 represents a distance between the vehicle lights; L2 represents the width of the vehicle; α1 and α2 represent inward angles of left and right headlights; 200 represents the vehicle light system; 201 represents the vehicle light; and 202 represents n vehicle light controller.

### Detailed Description of the Invention

Only some exemplary embodiments are briefly described herein. As those skilled in the art can realize, the described embodiments can be modified in various different modes without departing from the scope of the present invention. Therefore, the accompanying drawings and descriptions are considered to be exemplary in nature and not restrictive.

In the descriptions of the present invention, it should be understood that the azimuth or position relationship indicated by the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise" and the like refers to the azimuth or position relationship shown on the basis of the accompanying drawings, is used for only facilitating the description of the present invention and simplifying the descriptions, rather than indicating or implying that the indicated device or element must have a specific azimuth or be constructed and operated in a specific azimuth, so the azimuth or position relationship shall not be considered as a limitation to the present invention. In addition, the terms "first" and "second" are used for only describing, rather than indicating or implying the relative importance or implicitly indicating the number of the indicated technical features. Therefore, the features defined with "first" and "second" can explicitly or implicitly comprise one or more of the features. In the illustration of the present invention, "a plurality of" represents two or more, unless otherwise specifically defined.

In the illustration of the present invention, it should be noted that, unless otherwise clearly specified and limited, the terms "mounting", "interconnection" and "connection" should be understood broadly. For example, "connection" may refer to fixed connection, detachable connection or integral connection, may also refer to mechanical connection, electrical connection or mutual communication, and may refer to direct connection, connection through a middle medium, internal communication of two elements or interaction between two elements. Those ordinary skilled in the art can understand the specific meanings of the above terms in the present invention according to specific situations.

In the present invention, unless otherwise clearly specified and limited, a first feature is "above" or "below" a second feature means that the first feature is in direct contact with the second feature, or is in contact with the second feature through another feature other than the first and second features. In addition, the first feature is "above", "over" and "on" the second feature means that the first feature is directly above and obliquely above the second feature, or simply indicates that the horizontal height of the first feature is greater than that of the second feature. The first feature is "below", "underneath" and "under" the second feature means that the first feature is directly above and obliquely above the second feature, or simply indicates that the horizontal height of the first feature is smaller than that of the second feature.

The following disclosure provides a plurality of different embodiments or examples for implementing different structures of the present invention. To simplify the disclosure of the present invention, components and arrangements of specific examples are described below. Of course, the components and arrangements are only examples and are not intended to limit the present invention. In addition, the present invention can repeat reference numerals and/or reference letters in different examples; and such repetition is used for the sake of simplification and clarification, and does not indicate the relationship between the various discussed embodiments and/or arrangements. Furthermore, the present invention provides examples of various specific processes and materials, but those skilled in the art can realize the application of other processes and/or the use of other materials.

The preferred embodiments of the present invention will be described below in combination with the accompanying drawings. It should be understood that the preferred embodiments described here are used for only illustrating and explaining the present invention, rather than limiting the present invention.

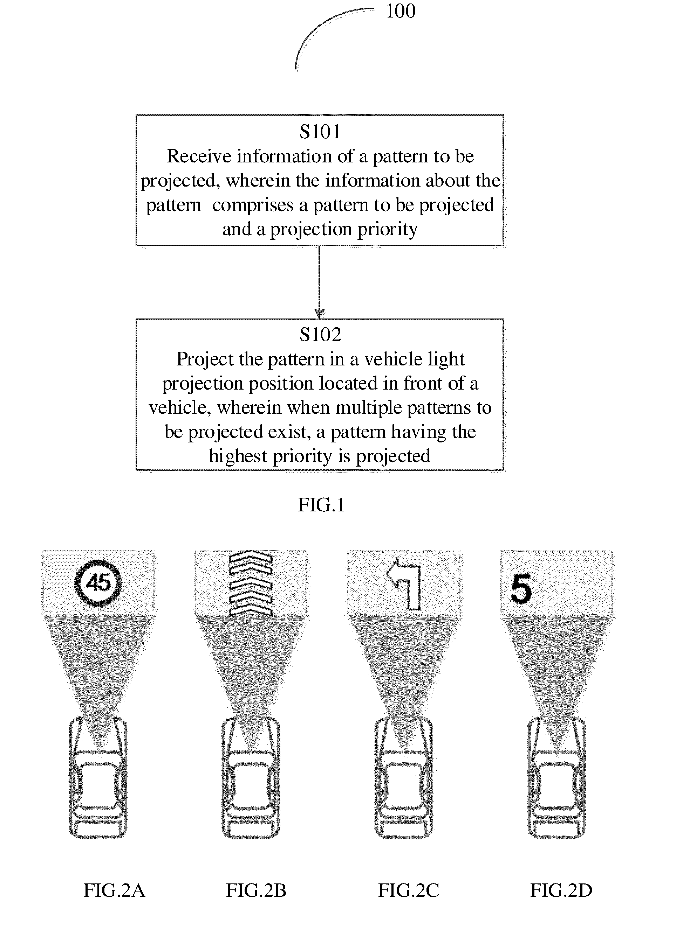

Figure 1 shows a method 100 of projecting patterns with vehicle lights according to a first embodiment of the present invention. The method will be described in detail below with reference to Figure 1.

As shown in Figure 1, the method 100 comprises the steps as follows.

Step S101: receiving information of a pattern to be projected, wherein the information of the pattern to be projected comprises the pattern to be projected and the projection priority.

In the present invention, "the information of the pattern to be projected" comprises the pattern to be projected and the projection priority. For example, at least one pattern to be projected exists; and each pattern to be projected has a corresponding priority. "The information of the pattern to be projected" can also comprise other parameters of the pattern to be projected, such as the type of the pattern, the specific image and the projection position.

The vehicle light controller of a vehicle comprises, for example, a control module and a storage module, wherein the control module can receive the information of the surrounding environment of the vehicle and the state information of the vehicle. The control module of the vehicle light controller is coupled or communicated with sensors of the vehicle, an electronic control unit (ECU) of the vehicle and various devices on the vehicle that can be operated by a driver or user, so that the information of the surrounding environment of the vehicle (such as pedestrians, obstacles and speed limit around the vehicle) and the state information of the vehicle (such as speed, turning and fault code) can be obtained. Various information of the pattern to be projected can be pre-stored in the storage module for the control module to recall. The control module judges whether the preset projection conditions are satisfied after receiving the information of the surrounding environment of the vehicle and/or the information of the vehicle state, and recalls the corresponding pattern information when judging that the preset projection conditions are satisfied.

For example, when the driver operates a turn signal light indicator, the control module of the vehicle light controller receives a turn signal from the turn signal light indicator, judges whether the projection conditions for projecting the turning sign are satisfied, and if so, recalls the information of projected pattern of the turning sign from the storage module. When a laser radar of the vehicle detects an obstacle in front of the vehicle, the control module of the vehicle light controller receives the obstacle information, judges whether conditions of projecting the obstacle reminding/dodging sign are satisfied, and if so, recalls the information of projected pattern of the obstacle reminding/dodging sign from the storage module.

Furthermore or alternatively, the control module of the vehicle light controller can be coupled with the ECU of the vehicle, to receive a projection instruction of receiving the pattern from the ECU. For example, when the ECU diagnoses that the vehicle has a fault, the ECU can send a fault code projection instruction to the control module of the vehicle light controller and send a fault code at the same time.

The projection instruction may also comprise a number ID of the pattern to be projected. The vehicle light controller can obtain the specific parameters of the pattern, such as the type of the pattern, the specific image, the projection position, the priority and other parameters according to the number ID of the pattern. According to a preferred embodiment of the present invention, a parameter table of the projected pattern is stored in the storage module of the vehicle light controller, and is indexed, for example, according to the number ID of the pattern. After receiving the number ID of the pattern, the vehicle light controller retrieves in the parameter table according to the number ID, to obtain the specific parameter information of the pattern. Of course, the present invention is not limited to the above mode; and those skilled in the art can also conceive other implementation modes. For example, the information of the pattern to be projected received by the vehicle light controller can comprise detailed parameters of the pattern, such as specific image, projection position and priority, which also falls within the protection scope of the present invention.

Step S102: projecting the pattern to be projected onto a projection region of vehicle lights in front of the vehicle, wherein the pattern to be projected with the highest priority is projected in the case of conflict of a plurality of patterns to be projected.

In the cast of only one pattern to be projected, the conflict does not exist, so the pattern to be projected can be directly projected onto the projection region of the vehicle lights in front of the vehicle. In the case of a plurality of patterns to be projected and no conflict among the plurality of patterns to be projected, similarly, the plurality of patterns to be projected can be directly projected onto the projection region of the vehicle lights in front of the vehicle.

One of the improvements of the present invention lies in that in the case of conflict of a plurality of patterns to be projected, for example, when a plurality of patterns to be projected need to be projected onto one projection position, the pattern with the highest priority is projected according to the priorities of the patterns to be projected, thereby ensuring that the pattern with the highest priority can be projected in time. For example, according to one embodiment of the present invention, in four projection patterns of the turning sign, the safe distance keeping sign, the speed limit sign and the real-time speed sign, the turning sing, for example, has the highest priority, due to the turning sign is given out by the driver of the vehicle and most directly reflects the operation will of the driver. Therefore, when the pattern of the turning sign conflicts with other types of patterns, the pattern of the turning sign is projected first.

Those skilled in the art should understand that the so-called "conflict" in the present invention means that the projection logics of two patterns to be projected conflict. For example, when the projection position of one pattern to be projected completely coincides or partially overlaps with the projection position of another pattern to be projected, the two patterns conflict. Or, if the projection logic of the vehicle lights only allows to project one pattern at a time, then when the projection conditions of two patterns to be projected are satisfied, even if the projection positions of the two patterns are completely separated, the two patterns conflict. The above contents should all fall within the protection scope of the present invention.

According to a preferred embodiment of the present invention, the method 100 further comprises: acquiring the information of the surrounding environment and the vehicle state before receiving the information of the pattern to be projected; judging whether the preset projection conditions are satisfied; and performing the step of receiving the information of the pattern to be projected when judging that the preset projection conditions are satisfied.

For example, various sensors and cameras on the vehicle can acquire the various state information of the vehicle and the information of surrounding environment of the vehicle; the acquired information is transmitted to the vehicle light controller; and the control module of the vehicle light controller judges whether the preset projection conditions are satisfied. If the preset projection conditions are satisfied, the control module recalls the specific pattern information from the storage module.

According to a preferred embodiment of the present invention, the method 100 further comprises step S103: determining the projection position of the pattern to be projected according to the information of the pattern to be projected.

As mentioned above, the parameter table can be stored in a memory of the vehicle light controller; and the projection position of the pattern to be projected can be obtained by retrieval. Alternatively, the information received by the vehicle light controller can also comprise the projection position of the pattern at the same time; and after receiving the information, the vehicle light controller decodes the information data to obtain the relevant information of the projection position. For example, the projection position can be front of the vehicle lights, left in front of the vehicle lights, right in front of the vehicle lights, or outside the outline of the vehicle (for example, the narrow road width sign).

According to a preferred embodiment of the present invention, the vehicle lights can project a variety of different patterns, which have pattern types with different priorities, comprise but not limited to external person warning signs (such as a turning sign), driving assistance signs (such as a safe distance keeping sign), driver warning signs (such as a speed limit sign) and information signs (such as a real-time speed sign). The above pattern types will be described later and shown in the accompanying drawings. For example, some pattern types have higher priorities; and some pattern types have lower priorities. The external person warning signs, for example, comprise the turning sign and a zebra crossing sign with a certain priority order, mainly for providing information and instructions to pedestrians outside the vehicle. The driving assistance signs, for example, comprise an acceleration/deceleration reminding sign, a safe distance keeping sign and an obstacle reminding/dodging sign with a certain priority order, mainly for providing some information to the driver of the vehicle to assist the operation of the driver. The driver warning signs, for example, comprise a speed limit sign, a narrow road width sign, a pedestrian and livestock caution sign, mainly for providing some warning or reminding information to the driver of the vehicle to improve the driving safety. The information signs, for example, comprise a speed sign, a fault code sign, a LOGO sign and a custom projection sign with a certain priority order. For example, the turning sign reflects the turning operation of the vehicle, such as the operation for the turn signal light from the driver of the vehicle. The safe distance keeping sign reflects that the distance between the vehicle and a neighboring vehicle (such as the vehicle ahead or the vehicle behind) is smaller than a certain distance threshold. The speed limit sign reflects the speed limit information of the current road, such as the speed limit indication information obtained from images acquired by the camera of the vehicle and identified by an image processing system, or the speed limit information from an on-board navigation unit. The real-time speed sign reflects the current running speed of the vehicle.

According to a preferred embodiment of the present invention, the priority of the external person warning signs is higher than that of the driving assistance signs; the priority of the driving assistance signs is higher than that of the driver warning signs; and the priority of the driver warning signs is higher than that of the information signs.

According to a preferred embodiment of the present invention, for the external person warning signs, the priority of the zebra crossing sign is higher than that of the turning sign. For the driving assistance signs, the priority of the safe distance keeping sign is higher than that of the obstacle reminding/dodging sign; and the priority of the obstacle reminding/dodging sign is higher than that of the acceleration/deceleration reminding sign. For the information signs, the priority of the fault code sign is higher than that of the speed sign. The above setting of priorities is only one preferred embodiment of the present invention. Those skilled in the art can set or modify the priorities according to specific requirements and actual situations, which falls within the protection scope of the present solution.

According to the pattern type and the corresponding priority set in the preferred embodiment of the present invention, it can be ensured that the information with the highest priority is presented to the driver of the vehicle and the pedestrians outside in time, so that the driver of the vehicle, drivers of other vehicle and pedestrians can simply and clearly obtain the information of the vehicle state and the surrounding environment, thereby greatly improving the driving safety.

The following Table I shows a specific embodiment of the above pattern types, preset projection conditions and the corresponding projection positions. The types of the projected signs, the preset projection conditions and the projection positions shown in Table 1 are only exemplary. Those skilled in the art can increase or decrease the types of projected signs, modify the preset projection conditions and adjust the projection positions as needed.

**Table 1**

| Category | No. | Projected sign | Preset projection conditions | Projection position |
|---|---|---|---|---|
| Information signs | 1 | Speed | The Auto switch is turned on; the HMI switch of turning projection function is set to "ON"; the speed is greater than 0 km/h; and the automatic dipped headlight turn-on signal is received. | Left projection region |
| | 2 | Fault code | The Auto switch is turned on; the HMI switch of turning projection function is set to "ON"; the speed is greater than 0 km/h; and the automatic dipped headlight turn-on signal is received. | Left projection region |
| | 3 | LOGO | The Auto switch is turned on; the HMI switch of static projection function is set to "ON"; the automatic dipped headlight turn-on signal is received; and the vehicle ignition state is ACC. | Middle projection region |
| | 4 | Custom projection | The Auto switch is turned on; the HMI switch of user text custom function is set to "ON"; the speed is 0; the automatic dipped headlight turn-on signal is received; the ignition signal is ON; and the gear state is P. | Middle projection region |
| Driver warning signs | 5 | Speed limit | The Auto switch is turned on; the HMI switch of speed limit sign identification function is set to "ON"; the speed is greater than or equal to 5 km/h; the automatic dipped headlight turn-on signal is received; and the speed limit sign ahead is detected. | Middle projection region |
| | 6 | Narrow road width | The Auto switch is turned on; the switch of dashboard width light is turned on; the speed is smaller than 30 km/h; and the automatic dipped headlight turn-on signal is received. | Both sides of the projection region (outline of the vehicle in the driving direction) |
| | 7 | Pedestrian and livestock caution | The Auto switch is turned on; the HMI switch of vehicle anti-glare function is set to "ON"; the ambient light intensity is lower than a set value L2; and target pedestrians and livestock are detected. | Middle projection region |
| External person warning signs | 8 | Turning | The Auto switch is turned on; the HMI switch of turning projection function is set to "ON"; the speed is smaller than 60 km/h; the automatic dipped headlight turn-on signal is received; and the turn signal light is turned on. | Middle projection region |
| | 9 | Zebra crossing | The Auto switch is turned on; the HMI switch of dynamic zebra crossing function is set to "ON"; the speed is 0; the automatic dipped headlight turn-on signal is received; the braking signal is received; and pedestrians are detected, and the distance from the vehicle is 13< S<25 m. | Whole projection region |
| Driving assistance signs | 10 | Acceleration reminding/ deceleration reminding | The Auto switch is turned on; the HMI switch of safe distance keeping projection function is set to "ON"; the speed is greater than or equal to 0 km/h; the automatic dipped headlight turn-on signal is received; and the real-time position of the vehicle is positioned with a high-precision map, the minimum/maximum speed of the road is obtained, and the current speed is compared with the required value to judge acceleration/deceleration. | Projection region |
| | 11 | Safe distance keeping | The Auto switch is turned on; the HMI switch of safe distance keeping projection function is set to "ON"; the speed is greater than or equal to 30 km/h; the automatic dipped headlight turn-on signal is received; and the vehicle ahead is detected, and the vehicle headway is smaller than 5 s. | Middle projection region |
| | 12 | Obstacle reminding/dodging | The Auto switch is turned on; the HMI switch of safe distance keeping projection function is set to "ON"; the speed is greater than or equal to 30 km/h; the automatic dipped headlight turn-on signal is received; and the obstacle ahead is detected, and the vehicle headway is smaller than 5 s. | Middle projection region |

According to the present invention, the projection region of the vehicle lights can be divided into different sub-regions for projecting different patterns. For example, according to one embodiment, the projection region of the vehicle lights comprises a middle projection region and a side projection region, wherein the real-time speed sign and the fault code sign are displayed in the side projection region; and the LOGO sign, the custom projection sign, the pedestrian and livestock caution sign, the turning sign, the safe distance keeping sign, the speed limit sign and the obstacle reminding/dodging sign are displayed in the middle projection region.

Alternatively, the projection region of the vehicle lights comprises a left projection region, a right projection region and a middle projection region, wherein the real-time speed sign and the fault code sign are displayed in the left projection region or the right projection region; and the LOGO sign, the custom projection sign, the pedestrian and livestock caution sign, the turning sign, the safe distance keeping sign, the speed limit sign and the obstacle reminding/dodging sign are displayed in the middle projection region.

Figures 2A-2D show examples of projection with the method according to a preferred embodiment of the present invention. The vehicle lights have two pattern projection regions, i.e., the middle projection region and the side projection region. In figures 2A, 2B and 2C, the pattern is projected onto the middle projection region. In Figure 2D, the pattern is projected onto the side projection region. In addition, in Figure 2D, it is schematically shown that the side projection region is located on the right side of the middle projection region, which cannot limit the protection scope of the present invention; and the side projection region can also be located on the left side of the middle projection region, which falls within the protection scope of the present invention.

According to a preferred embodiment of the present invention, the pattern of the real-time speed sign is displayed in the side projection region, as shown in Figure 2D; and patterns of the turning sign (as shown in Figure 2C), the safe distance keeping sign (as shown in Figure 2B) and the speed limit sign (as shown in Figure 2A) are displayed in the middle projection region.

Those skilled in the art can understand that in the above embodiments, since the pattern of the real-time speed sign is set to be displayed in the side projection region, the pattern will not conflict with the other three types of patterns. However, when the other three types of patterns conflict, for example, when the driver of the vehicle triggers the turn signal light controller, the vehicle is too close to the vehicle ahead, and the road speed limit information is detected, the patterns are projected according to a priority order of the turning sign > the safe distance keeping sign > the speed limit sign, and the pattern of the turning sign will be projected preferentially.

According to a preferred embodiment of the present invention, the vehicle lights are configured to project only one pattern at the same moment, as shown in Figures 2A-2D. The method 100 preferably further comprises the following steps: receiving information of another pattern to be projected, comparing the priority of the other pattern to be projected with the priority of the currently projected pattern; and stopping projecting the currently projected pattern and projecting the other pattern to be projected if the priority of the other pattern to be projected is higher than that of the currently projected pattern. For example, it is assumed that the currently projected pattern is as shown in Figure 2B, the pattern of the safe distance keeping sign is projected. At this time, if the driver triggers the turn signal light controller, and the priority of the turning sign is higher than that of the safe distance keeping sign, the projection of the pattern in Figure 2B is stopped and the pattern in Figure 2C is projected instead.

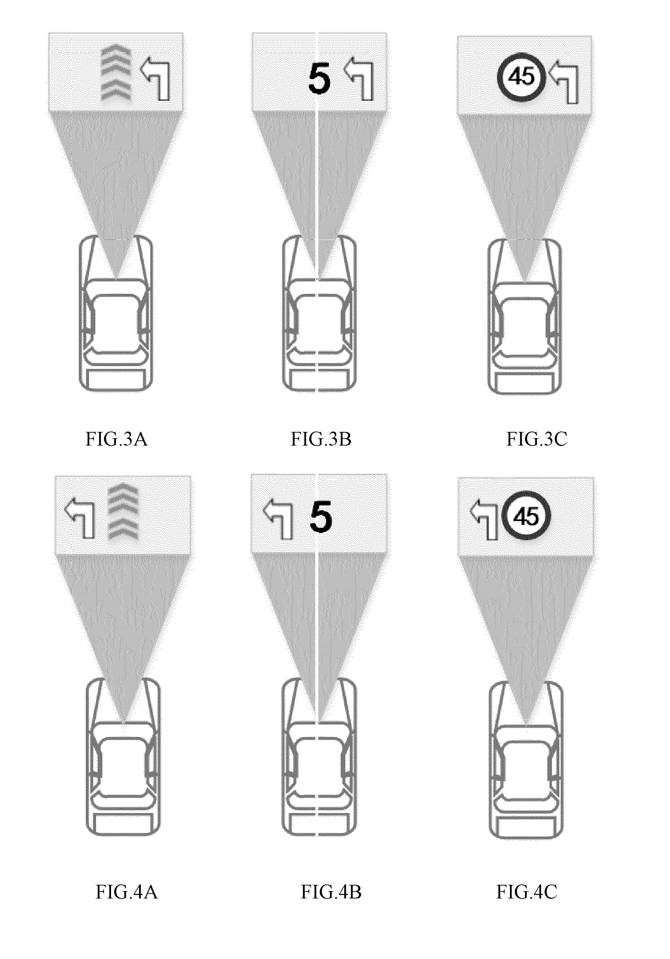

Unlike the above projection of only one pattern at the same moment, according to a preferred embodiment of the present invention, the vehicle lights are configured to project two or more patterns at the same moment. For example, as shown in Figures 3A, 3B and 3C, the vehicle lights can simultaneously project two patterns, for example, the vehicle lights have two pattern projection regions, i.e., the middle projection region and the right projection region. The turning sign is displayed in the right projection region; and the speed limit sign, the safe distance keeping sign and the real-time speed sign are displayed in the middle projection region, right in front of the driver. The turning sign can coexist with one of the other three projection patterns.

Therefore, the speed limit sign, the safe distance keeping sign and the real-time speed sign may conflict. When the projection conditions are satisfied at the same time, i.e., when the three signs conflict, the order of projecting the patterns is determined according to the priority order of the safe distance keeping sign > the speed limit sign > the real-time speed sign.

Alternatively, the vehicle lights have two pattern projection regions, i.e., the middle projection region and the left projection region, as shown in Figures 4A, 4B and 4C, which are not repeated here.

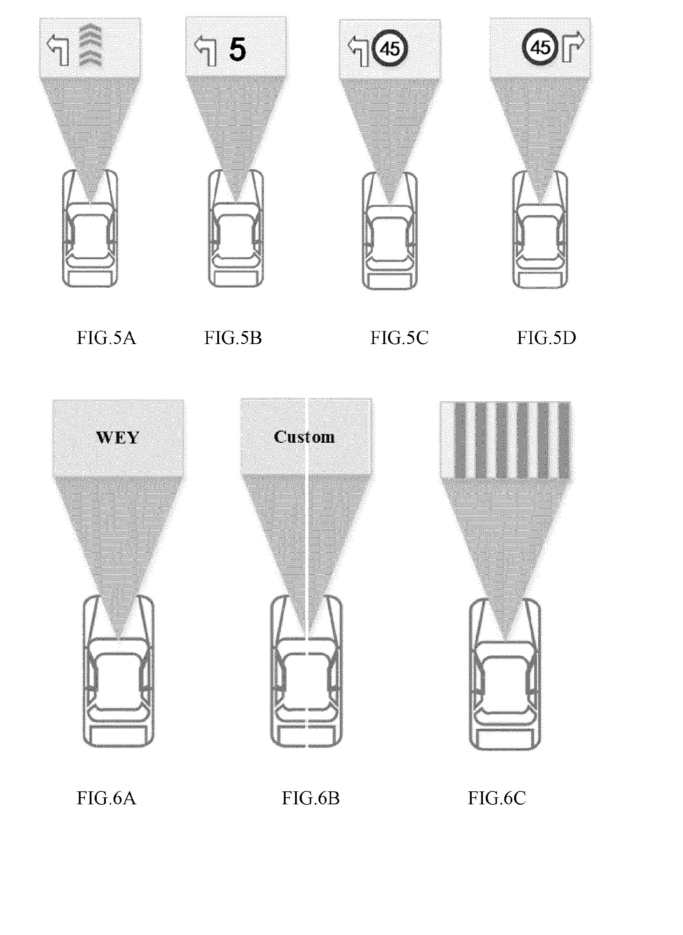

According to a preferred embodiment of the present invention, the vehicle lights have three pattern projection regions, i.e., the left projection region, the right projection region and the middle projection region, as shown in Figures 5A-5D. The patterns of the safe distance keeping sign, the speed limit sign and the real-time speed sign are projected onto the middle projection region. The turning sign comprises a left turn sign and a right turn sign, wherein the pattern of the left turn sign is projected onto the left projection region (as shown in Figures 5A, 5B and 5C); and the pattern of the right turn sign is projected onto the right projection region (as shown in Figure 5D).

According to a preferred embodiment of the present invention, the vehicle lights are configured to project two or more patterns at the same moment; and the method 100 further comprises the following steps:
receiving information of another pattern to be projected;
determining the projection position of the other pattern to be projected;
if the currently projected pattern has been projected onto the projection position of the other pattern to be projected, comparing the priority of the other pattern to be projected with that of the currently projected pattern; and if the priority of the other pattern to be projected is higher than that of the currently projected pattern, stopping projecting the currently projected pattern and projecting the other pattern to be projected.

For example, it is assumed that the currently projected pattern is as shown in Figure 5B, and the speed limit information is detected currently, the middle projection region is determined as the projection position according to the information of the pattern of speed limit sign, and the pattern of the current speed sign has been projected onto the middle projection region. Then, if it is determined that the priority of the speed limit sign is higher according to the priorities of the speed limit sign and the current speed sign, the projection for the pattern of the current speed sign is interrupted, and the projection for the pattern of the speed limit sign is started.

In addition, according to a preferred embodiment of the present invention, the vehicle lights are configured to project two or more patterns at the same moment; the patterns to be projected are projected onto the projection region in front of the vehicle; the projection region comprises a middle projection region and a side projection region; and the two or more patterns projected at the same moment, the pattern with higher priority is projected onto the middle projection region, and the pattern with lower priority is projected onto the side projection region.

According to a preferred embodiment of the present invention, the method 100 further comprises the following steps:
if the vehicle is slowed down to zero and a pedestrian ahead is detected, projecting the zebra crossing sign, as shown in Figure 6C; and/or
when the vehicle is started, projecting a preset pattern (such as the LOGO of the vehicle, as shown in Figure 6A) for a certain time, and then projecting a user-defined pattern or text, as shown in Figure 6B; and/or
when it is detected that the user is not wearing a seatbelt, projecting a seatbelt warning sign.

For example, in the case of driving at night, when driving to an intersection, the system is in a standby state, the speed is zero, the system detects the pedestrian ahead, and the distance between the pedestrian and the vehicle is longer than 13 meters and shorter than 25 meters, the dynamic zebra crossing function is turned on.

When the vehicle is started at night, the system is in the standby state, the ambient illuminance of the vehicle is less than the set value, and the logo sign appears in a dipped beam region in front of the vehicle after the vehicle is started. The logo sign is projected instantly; and then a user-defined text or pattern is projected. The user, for example, can set the user-defined text or pattern through a graphical user interface. At present, a plurality of vehicles have an on-board multimedia system, which provides users with the graphical user interfaces. According to a preferred embodiment of the present invention, the user can customize the text or pattern expected to be projected through the graphical user interface of the vehicle multimedia system, for example, can input the text, upload personal pictures of the user, or choose from some options provided by the vehicle multimedia system. Alternatively, the users can also associate their own mobile phone with an on-board computer system, such as CarPlay system of Apple (AAPL), so that the users can customize the text or pattern expected to be projected through the graphical user interface of the mobile phone. The ECU or the vehicle light controller of the vehicle receives the input of the user, and stores the input in memory; and the user-defined text or pattern will be projected in front of the vehicle when the specific projection conditions are satisfied.

When the vehicle is started at night and the engine is started, it is detected that the driver is not wearing the seatbelt, and a sign of not wearing the seatbelt is projected in front of the vehicle.

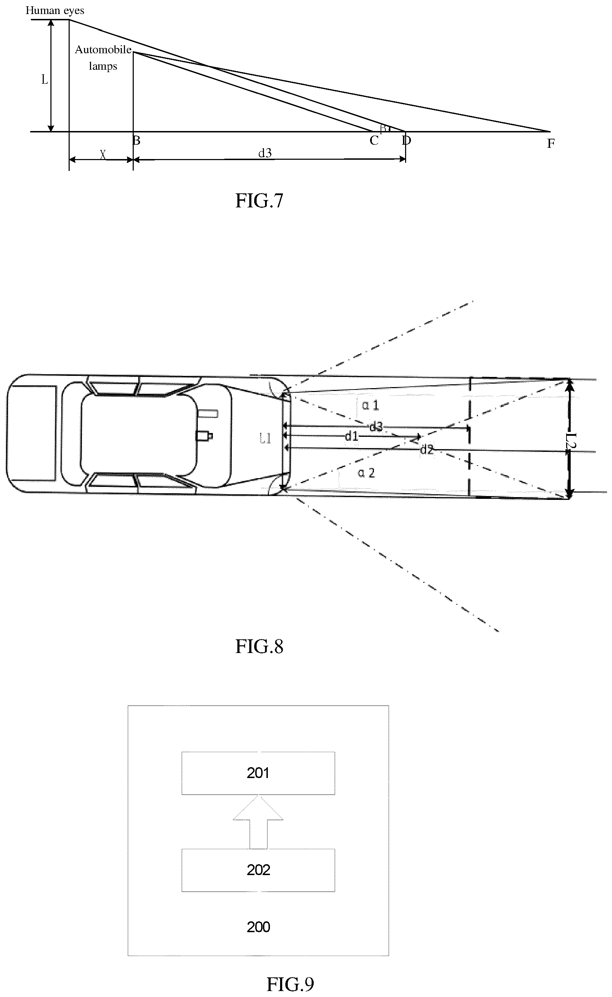

In addition, the inventor found that when the vehicle headlight is utilized to project the pattern, the pattern is projected onto a specific region, which is very beneficial for the driver to observe. The situation will be described below with reference to Figures 7 and 8.

As shown in Figure 7, the point C represents the nearest point which can be clearly projected by the headlight of the vehicle; the point F represents the farthest point which can be clearly projected by the headlight; the point D represents a point nearest to the vehicle, which can be seen by human eyes when the driver drives normally; the BD distance is d3; β represents an angle formed by the road surface and the point (the point D) nearest to the vehicle that can be seen by human eyes; X refers to a horizontal distance between the human eyes and the vehicle lights when the driver drives normally; L represents the height of human eyes relative to the road surface; β, X and L can be measured in advance. For example, as shown in Figure 7, the length of d3 can be calculated according to tanβ=L/(X+d3). As shown in Figure 8, it is assumed that the distance between the vehicle lights is L1, the width of the vehicle is L2, the inward angles of the left and right headlights are α1 and α2 respectively (i.e., half of the field of view (FOV) of the vehicle lights), the shortest distance of the overlapping distance is d1 (i.e., the distance from the intersection of the FOV of the vehicle lights), and the longest distance is d2 (i.e., the distance from a position with the same width as the vehicle). When α1=α2, the length of d2 can be calculated according to (L1+L2)/2d2=tanα2, and a region between (d3, d2) can be designated as the projection region. Therefore, according to a preferred embodiment of the present invention, the projection regions of the patterns in the above method 100, Figures 2A-2D, 3A-3C, 4A-4C, 5A-5D and 6A-6C are all the regions between (d3, d2).

The method for projecting patterns with vehicle lights according to one embodiment of the present invention is described above. The present invention also relates to a vehicle light system 200, as shown in Figure 9. The vehicle light system 200 comprises vehicle lights 201 and a vehicle light controller 202. The vehicle lights 201 are configured as vehicle lights 201 capable of projecting different pattern types of patterns in front of the vehicle lights, such as pixel type vehicle lights, which have light sources, DMD chips and lenses. The light emitted by the light sources shines on the DMD chips after passing through the lenses; the DMD chips are provided with millions of small lenses; and each small lens can be independently controlled to output the light incident onto the small lens to the front of the vehicle lights or to a light absorption device, thereby controlling the projected pattern in front of the vehicle light. The vehicle lights 201, for example, are pixel type vehicle lights.

The vehicle light controller 202 is coupled with the vehicle lights 201, to control the patterns projected by the vehicle lights 201. The vehicle light controller 202, for example, is configured to perform the above method 100, and control the patterns projected by the vehicle lights 201 by controlling the DMD chips and the small lenses on the DMD chips.

According to a preferred embodiment of the present invention, the vehicle light controller 202 is coupled with the turn signal light controller, the safe distance sensor, the camera and the speed sensor of the vehicle to receive a turning signal, a safe distance keeping signal, speed limit information and real-time speed information respectively.

For example, when the driver operates the vehicle turn signal light controller, a turning controller outputs an interrupt signal or a trigger signal to the vehicle light controller 202; and the vehicle light controller 202 determines whether to project the information of turning sign and the specific projection position according to the method 100.

When the distance sensor detects that the distance between the vehicle and the neighboring vehicles (such as the vehicle ahead, the vehicle behind or the vehicles on the left and right sides) is too short and less than the preset threshold, the interrupt signal or the trigger signal is outputted to the vehicle light controller 202; and the vehicle light controller 202 determines whether to project the information of safe distance keeping sign and the specific projection position according to the method 100.

When the camera detects the speed limit sign on the road, an image processing unit identifies the speed limit sign and information through image processing; and then the central control system of the vehicle outputs the interrupt signal or the trigger signal to the vehicle light controller 202; and the vehicle light controller 202 determines whether to project the information of speed limit sign and the specific projection position according to the method 100.

The vehicle light controller is coupled with the speed sensor, for example, to receive the output of the speed sensor in real time. Since the priority of the speed sign is the lowest, the real-time speed information is projected only in the case of no conflict with other types of patterns.

The present invention also relates to a vehicle, comprising the vehicle light system 200 as described above.

According to the embodiments of the present invention, an image matched with the current information state is selected from a plurality of images obtained in advance as a projected image through the acquired information of the surrounding environment of the vehicle and the information of the vehicle state. The target image is projected onto the road ahead where the vehicle is currently running through the headlights; all the projection information is classified effectively; the relevant positions of various types of projection information in the projection region are planned; and the displaying priorities of various types of information are arranged at the same time, so that the projected image can be reasonably projected at a position where the driver has the optimal FOV, and the requirements on easy observation of drivers with different heights can be satisfied. The method enables the driver to clearly and accurately obtain the information of vehicle state and the surrounding environment (such as current speed, speed limit information and vehicle distance), and enable the surrounding traffic participants to know the driving intention of the driver in time, thereby greatly improving the driving safety.

The projection method based on the headlights according to the embodiments of the present invention enables the information of road conditions and the vehicle state to be reasonably projected onto the road ahead, and for example, comprises the following steps:
1. acquiring the information of the surrounding environment and the vehicle state, and judging whether the preset projection conditions are satisfied;
2. receiving the information of the pattern to be projected when judging that the preset projection conditions are satisfied; and
3. projecting the pattern to be projected onto the projection region of the vehicle lights, and projecting the pattern to be projected with the highest priority according to the priority order in the case of conflict of a plurality of patterns to be projected.

In addition, due to numerous and complicated projection information during driving, in order to ensure that the driver can obtain the projection information of the vehicle lights clearly and accurately, three projection region layout solutions are designed in the determined projection region range for comparison, so that the driver can obtain the projection information clearly and rapidly.

The embodiments of the present invention provide a machine-readable storage medium, on which instructions are stored; and the instructions are used for enabling a machine to perform the method for projecting patterns with the vehicle lights.

The embodiments of the present invention provide a CPU, which is used for running a program; and the method for projecting patterns with vehicle lights is performed when the program runs.

The embodiments of the present invention provide equipment, which comprises a CPU, a memory and a program stored in the memory and capable of running on the CPU; and the method for projecting patterns with the vehicle lights is performed when the CPU performs the program.

The present application also provides a computer program product, which is suitable for performing a program initialized with the steps of the method for projecting patterns with the vehicle lights when the computer program product is performed on the vehicle.

Those skilled in the art should understand that the embodiments of the present application can be provided as a method, a system or a computer program product. Therefore, the present application can adopt the form of an entirely hardware embodiment, an entirely software embodiment or an embodiment combining software with hardware. In addition, the present application can adopt the form of a computer program product implemented on one or more computer-usable storage media (comprising but not limited to disk memory, CD-ROM, optical memory and the like) containing computer-usable program codes.

The present application is described with reference to flow charts and/or block diagrams of methods, equipment (system) and computer program products according to the embodiments of the present application. It should be understood that each flow and/or block in the flow charts and/or block diagrams, as well as combinations of flows and/or blocks in the flow charts and/or block diagrams can be implemented by the computer program instructions. The above computer program instructions can be provided to the CPU of a general-purpose computer, a special-purpose computer, an embedded processor or other programmable data processing equipment to produce a machine, so that the instructions performed by the CPU of the computer or other programmable data processing equipment can produce a device for implementing the functions specified in one or more flows of the flow charts and/or one or more blocks of the block diagrams.

The computer program instructions can also be stored in a computer-readable memory capable of guiding the computer or other programmable data processing equipment to operate in a specific mode, so that the instructions stored in the computer-readable memory can produce a manufactured product comprising an instruction device; and the instruction device can implement the functions specified in one or more flows of the flow charts and/or one or more blocks of the block diagrams.

The computer program instructions can also be loaded onto a computer or other programmable data processing equipment, so that a series of operation steps are performed on the computer or other programmable equipment to generate processing implemented by the computer; and the instructions performed on the computer or other programmable equipment are adopted to provide a step of implementing the functions specified in one or more flows of the flow charts and/or one or more blocks of the block diagrams.

In a typical configuration, computing equipment comprises one or more CPUs, input/output interfaces, network interfaces and memories.

The memory may comprise a non-permanent memory, a random access memory (RAM) and/or a non-volatile memory in computer-readable media, such as a read-only memory (ROM) or a flash RAM. The memory is an example of the computer-readable media.

The computer-readable media comprise permanent and non-permanent, removable and non-removable media, in which the information can be stored by any method or technology. The information may be computer-readable instructions, data structures, modules of programs or other data. Examples of storage media of computers comprise, but are not limited to a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a compact disk read only memory (CD-ROM), a digital versatile disk (DVD) or other optical memories, magnetic cassette tapes, magnetic tape-magnetic disk storage or other magnetic storage equipment or any other non-transmission media, which can be used for storing information accessible to the computing equipment.

## Claims

1. A method (100) for using vehicle light to project pattern, the method (100) comprising:
receiving information about a pattern to be projected, wherein the information of the pattern to be projected comprises a pattern to be projected and projection priority; and
projecting the pattern to be projected onto a projection region of vehicle lights (201) in front of a vehicle, wherein the pattern to be projected with the highest priority is projected in the case of conflict of a plurality of patterns to be projected,
wherein the vehicle lights (201) are configured to project two or more patterns at the same moment; the patterns to be projected are projected into a projection region in front of the vehicle;
**characterized in that**
the projection region comprises a middle projection region and a side projection region;
and for the two or more patterns projected at the same moment, the pattern with the highest priority is projected onto the middle projection region, while the pattern with the relatively low priority is projected onto the side projection region.

2. The method (100) according to claim 1, wherein before receiving the information of the patterns to be projected, the method (100) further comprises:
acquiring a surrounding environment and a state information of the vehicle;
judging whether a preset projection conditions are satisfied; and
performing the step of receiving the information of the pattern to be projected when judging that the preset projection conditions are satisfied.

3. The method (100) according to claim 1 or 2, wherein the patterns have pattern types with different priorities; the pattern types comprise external person warning signs, driving assistance signs, driver warning signs and information signs, wherein the priority of the external person warning signs is higher than the priority of the driving assistance signs; the priority of the driving assistance signs is higher than the priority of the driver warning signs; and the priority of the driver warning signs is higher than the priority of the information signs.

4. The method (100) according to claim 3, wherein the external person warning signs comprise a turning sign and a zebra crossing sign with a certain priority order; and/or
the driving assistance signs comprise an acceleration/deceleration reminding sign, a safe distance keeping sign and an obstacle reminding/dodging sign with a certain priority order; and/or
the driver warning signs comprise a speed limit sign, a narrow road width sign, a pedestrian and livestock caution sign; and/or
the information signs comprise a speed sign, a fault code sign, a LOGO sign and a custom projection sign with a certain priority order.

5. The method (100) according to claim 3 or 4, wherein the projection region of the vehicle lights (201) comprises a middle projection region and a side projection region, wherein the real-time speed sign and the fault code sign are displayed in the side projection region; and the LOGO sign, the custom projection sign, the pedestrian and livestock caution sign, the turning sign, the safe distance keeping sign, the speed limit sign and the obstacle reminding/dodging sign are displayed in the middle projection region.

6. The method (100) according to claim 3 or 4, wherein the projection region of the vehicle lights (201) comprises a left projection region, a right projection region and a middle projection region, wherein the real-time speed signs and fault code signs are displayed in the left projection region or the right projection region; and the LOGO signs, the custom projection signs, the pedestrian and livestock caution signs, the turning signs, the safe distance keeping signs, the speed limit signs and the obstacle reminding/dodging signs are displayed in the middle projection region.

7. The method (100) according to claim 1 or 2, wherein the vehicle lights (201) are configured to project only one pattern at the same moment; and the method (100) further comprises:
receiving information of another pattern to be projected, wherein the information of the pattern to be projected comprises the priority of the pattern to be projected;
comparing the priority of the other pattern to be projected with that of the currently projected pattern; if the priority of the other pattern to be projected is higher than that of the currently projected pattern, stopping projecting the currently projected pattern, and projecting the other pattern to be projected.

8. The method (100) according to claim 1 or 2, wherein the vehicle lights (201) are configured to project two or more patterns at the same moment: and the method (100) further comprises:
receiving information of another pattern to be projected, wherein the information of the pattern to be projected comprises a priority and a projection position of the pattern to be projected;
determining the projection position of the other pattern to be projected;
in response to the currently projected pattern has been projected onto the projection position of the other pattern to be projected, comparing the priority of the other pattern to be projected with that of the currently projected pattern; if the priority of the other pattern to be projected is higher than that of the currently projected pattern, stopping projecting the currently projected pattern, and projecting the other pattern to be projected.

9. A vehicle light system (200), comprising:
vehicle lights (201) configured to project different pattern types of patterns in front of the vehicle lights (201), and
a vehicle light controller (202) coupled with the vehicle lights (201) and configured to perform the method (100) of any one of claims 1-8 to control the patterns projected by the vehicle lights (201).

10. A vehicle, comprising the vehicle light system (200) of claim 9.

11. A machine-readable storage medium, that stores instructions used for enabling a machine to perform the method (100) for using vehicle lights (201) to project pattern of any one of claims 1-8.

12. A central processing unit (CPU), used for running a program to perform the method (100) for using vehicle light to project pattern of any one of claims 1-8.

## Patentansprüche

1. Verfahren (100) zur Verwendung von Fahrzeuglicht zum Projizieren von Mustern, wobei das Verfahren (100) die folgenden Schritte aufweist:
Empfangen von Informationen über ein zu projizierendes Muster, wobei die Informationen über das zu projizierende Muster ein zu projizierendes Muster und eine Projektionspriorität umfassen; und
Projizieren des zu projizierenden Musters auf einen Projektionsbereich von Fahrzeugleuchten (201) vor einem Fahrzeug, wobei im Falle eines Konflikts mehrerer zu projizierender Muster das zu projizierende Muster mit der höchsten Priorität projiziert wird,
wobei die Fahrzeugleuchten (201) so ausgebildet sind, dass sie zwei oder mehr Muster gleichzeitig projizieren; wobei die zu projizierenden Muster in einen Projektionsbereich vor dem Fahrzeug projiziert werden;
**dadurch gekennzeichnet, dass** der Projektionsbereich einen mittleren Projektionsbereich und einen seitlichen Projektionsbereich umfasst; und dass für die zwei oder mehr Muster, die zum gleichen Zeitpunkt projiziert werden, das Muster mit der höchsten Priorität auf den mittleren Projektionsbereich projiziert wird, während das Muster mit der relativ niedrigen Priorität auf den seitlichen Projektionsbereich projiziert wird.

2. Verfahren (100) nach Anspruch 1, wobei das Verfahren (100) vor dem Empfangen der Informationen über die zu projizierenden Muster ferner die folgenden Schritte aufweist:
Erfassen der Umgebung und der Zustandsinformationen des Fahrzeugs;
Beurteilen, ob vorgegebene Projektionsbedingungen erfüllt sind; und
Durchführen des Schritts des Empfangens der Informationen über das zu projizierende Muster, wenn festgestellt wird, dass die voreingestellten Projektionsbedingungen erfüllt sind.

3. Verfahren (100) nach Anspruch 1 oder 2, wobei die Muster Mustertypen mit unterschiedlichen Prioritäten aufweisen; wobei die Mustertypen externe Personenwarnzeichen, Fahrassistenzzeichen, Fahrerwarnzeichen und Informationszeichen aufweisen, wobei die Priorität der externen Personenwarnzeichen höher ist als die Priorität der Fahrassistenzzeichen, die Priorität der Fahrassistenzzeichen höher ist als die Priorität der Fahrerwarnzeichen, und die Priorität der Fahrerwarnzeichen höher ist als die Priorität der Informationszeichen.

4. Verfahren (100) nach Anspruch 3, wobei die externen Personenwarnzeichen ein Abbiegezeichen und ein Zebrastreifenzeichen mit einer bestimmten Prioritätsreihenfolge aufweisen; und/oder
die Fahrassistenzschilder ein Beschleunigungs-/Verzögerungserinnerungszeichen, ein Zeichen zum Einhalten eines Sicherheitsabstands und ein Hindernis-Erinnerungs-/Ausweichzeichen mit einer bestimmten Prioritätsreihenfolge aufweisen; und/oder
die Fahrerwarnzeichen eine Geschwindigkeitsbegrenzungszeichen, ein eine geringe Straßenbreite anzeigendes Zeichen, ein Fußgänger- und Viehwarnzeichen aufweisen; und/oder
die Informationszeichen ein Geschwindigkeitszeichen, ein Fehlercode-Zeichen, ein LOGO-Zeichen und ein individuelles Projektionszeichen mit einer bestimmten Prioritätsreihenfolge aufweisen.

5. Verfahren (100) nach Anspruch 3 oder 4, wobei der Projektionsbereich der Fahrzeugleuchten (201) einen mittleren Projektionsbereich und einen seitlichen Projektionsbereich umfasst, wobei das Echtzeit-Geschwindigkeitszeichen und das Fehlercode-Zeichen im seitlichen Projektionsbereich angezeigt werden; und das LOGO-Zeichen, das benutzerdefinierte Projektionszeichen, das Fußgänger- und Viehwarnzeichen, das Abbiegezeichen, das Zeichen zum Einhalten des Sicherheitsabstands, das Geschwindigkeitsbegrenzungszeichen und das Hindernis-Erinnerungs-/Ausweichzeichen im mittleren Projektionsbereich angezeigt werden.

6. Verfahren (100) nach Anspruch 3 oder 4, wobei der Projektionsbereich der Fahrzeugleuchten (201) einen linken Projektionsbereich, einen rechten Projektionsbereich und einen mittleren Projektionsbereich umfasst, wobei die Echtzeit-Geschwindigkeitszeichen und die Fehlercode-Zeichen im linken Projektionsbereich oder im rechten Projektionsbereich angezeigt werden; und wobei die LOGO-Zeichen, die benutzerdefinierten Projektionszeichen, die Fußgänger- und Viehwarnzeichen, die Abbiegezeichen, die Zeichen zum Einhalten des Sicherheitsabstands, die Geschwindigkeitsbegrenzungszeichen und die Hindernis-Erinnerungs-/Ausweichzeichen im mittleren Projektionsbereich angezeigt werden.

7. Verfahren (100) nach Anspruch 1 oder 2, wobei die Fahrzeugleuchten (201) so ausgebildet sind, dass sie nur ein Muster zum selben Zeitpunkt projizieren; und das Verfahren (100) ferner die folgenden Schritte umfasst:
Empfangen von Informationen über ein anderes zu projizierendes Muster, wobei die Informationen über das zu projizierende Muster die Priorität des zu projizierenden Musters umfassen; und
Vergleichen der Priorität des anderen zu projizierenden Musters mit der des aktuell projizierten Musters; wenn die Priorität des anderen zu projizierenden Musters höher ist als die des aktuell projizierten Musters, Beenden der Projektion des aktuell projizierten Musters und Projizieren des anderen zu projizierenden Musters.

8. Verfahren (100) nach Anspruch 1 oder 2, wobei die Fahrzeugleuchten (201) so ausgebildet sind, dass sie zwei oder mehr Muster zum selben Zeitpunkt projizieren; und das Verfahren (100) ferner die folgenden Schritte umfasst:
Empfangen von Informationen über ein anderes zu projizierendes Muster, wobei die Informationen über das zu projizierende Muster eine Priorität und eine Projektionsposition des zu projizierenden Musters umfassen;
Bestimmen der Projektionsposition des anderen zu projizierenden Musters;
in Reaktion darauf, dass das aktuell projizierte Muster auf die Projektionsposition des anderen zu projizierenden Musters projiziert wurde, Vergleichen der Priorität des anderen zu projizierenden Musters mit der des aktuell projizierten Musters; wenn die Priorität des anderen zu projizierenden Musters höher ist als die des aktuell projizierten Musters, Beenden der Projektion des aktuell projizierten Musters und Projizieren des anderen zu projizierenden Musters.

9. Fahrzeugbeleuchtungssystem (200), umfassend:
Fahrzeugleuchten (201), die so ausgebildet sind, dass sie verschiedene Mustertypen von Mustern vor die Fahrzeugleuchten (201) projizieren, und
eine Fahrzeugleuchtensteuerung (202), die mit den Fahrzeugleuchten (201) gekoppelt und so ausgebildet ist, dass sie das Verfahren (100) nach einem der Ansprüche 1-8 durchführt, um die von den Fahrzeugleuchten (201) projizierten Muster zu steuern.

10. Fahrzeug mit der dem Fahrzeugbeleuchtungssystem (200) nach Anspruch 9.

11. Maschinenlesbares Speichermedium, das Befehle speichert, die verwendet werden, um eine Maschine in die Lage zu versetzen, das Verfahren (100) zur Verwendung von Fahrzeugleuchten (201) zur Projektion von Mustern nach einem der Ansprüche 1-8 durchzuführen.

12. Zentralverarbeitungseinheit (CPU), die zum Ausführen eines Programms zur Durchführung des Verfahrens (100) zur Verwendung von Fahrzeuglicht zur Projektion von Mustern nach einem der Ansprüche 1-8 dient.

## Revendications

1. Procédé (100) d'utilisation d'un phare de véhicule pour projeter un motif, le procédé (100) comprenant les étapes consistant à :
recevoir des informations concernant un motif à projeter, dans lequel les informations du motif à projeter comprennent un motif à projeter et une priorité de projection ; et
projeter le motif à projeter sur une région de projection de phares de véhicule (201) à l'avant d'un véhicule, dans lequel le motif à projeter ayant la priorité la plus haute est projeté dans le cas d'un conflit entre motifs d'une pluralité de motifs à projeter,
dans lequel les phares de véhicule (201) sont configurés pour projeter au moins deux motifs au même moment ; les motifs à projeter son projetés dans une région de projection à l'avant du véhicule ;
**caractérisé en ce que**
la région de projection comprend une région de projection centrale et une région de projection latérale ; et, pour les au moins deux motifs projetés au même moment, le motif ayant la priorité la plus haute est projeté sur la région de projection centrale, tandis que le motif ayant la priorité relativement basse est projeté sur la région de projection latérale.

2. Procédé (100) selon la revendication 1, dans lequel, avant l'étape de réception des informations des motifs à projeter, le procédé (100) comprend en outre les étapes consistant à :
acquérir un environnement d'entourage et des informations d'état du véhicule ;
évaluer si des conditions de projection prédéfinies sont satisfaites ; et
exécuter l'étape de réception des informations du motif à projeter lors de l'évaluation du fait que les conditions de projection prédéfinies sont satisfaites.

3. Procédé (100) selon la revendication 1 ou la revendication 2, dans lequel les motifs ont des types de motif ayant des priorités différentes ; les types de motif comprennent des indications d'avertissement de personnes externes, des indications d'aide à la conduite, des indications d'avertissement de conducteur et des indications d'information, dans lequel la priorité des indications d'avertissement de personnes externes est plus haute que la priorité des indications d'aide à la conduite ; la priorité des indications d'aide à la conduite est plus haute que la priorité des indications d'avertissement de conducteur ; et la priorité des indications d'avertissement de conducteur est plus haute que la priorité des indications d'information.

4. Procédé (100) selon la revendication 3, dans lequel les indications d'avertissement de personnes externes comprennent une indication de changement de direction et une indication de passage pour piétons ayant un certain ordre de priorité ; et/ou
les indications d'aide à la conduite comprennent une indication de rappel d'accélération/décélération, une indication de maintien de distance de sécurité et une indication de rappel/esquive d'obstacle ayant un certain ordre de priorité ; et/ou
les indications d'avertissement de conducteur comprennent une indication de limitation de vitesse, une indication de largeur de route étroite, une indication de précaution par rapport aux piétons et au bétail ; et/ou
les indications d'information comprennent une indication de vitesse, une indication de code de défaut, une indication de LOGO et une indication de projection personnalisée ayant un certain ordre de priorité.

5. Procédé (100) selon la revendication 3 ou la revendication 4, dans lequel la région de projection des phares de véhicule (201) comprend une région de projection centrale et une région de projection latérale, dans lequel l'indication de vitesse en temps réel et l'indication de code de défaut sont affichées dans la région de projection latérale ; et l'indication de LOGO, l'indication de projection personnalisée, l'indication de précaution par rapport aux piétons et au bétail, l'indication de changement de direction, l'indication de maintien de distance de sécurité, l'indication de limitation de vitesse et l'indication de rappel/esquive d'obstacle sont affichées dans la région de projection centrale.

6. Procédé (100) selon la revendication 3 ou la revendication 4, dans lequel la région de projection des phares de véhicule (201) comprend une région de projection gauche, une région de projection droite et une région de projection centrale, dans lequel les indications de vitesse en temps réel et les indications de code de défaut sont affichées dans la région de projection gauche ou dans la région de projection droite ; et les indications de LOGO, les indications de projection personnalisée, les indications de précaution par rapport aux piétons et au bétail, les indications de changement de direction, les indications de maintien de distance de sécurité, les indications de limitation de vitesse et les indications de rappel/esquive d'obstacle sont affichées dans la région de projection centrale.

7. Procédé (100) selon la revendication 1 ou la revendication 2, dans lequel les phares de véhicule (201) sont configurés pour ne projeter qu'un seul motif au même moment ; et le procédé (100) comprend en outre les étapes consistant à :
recevoir des informations d'un autre motif à projeter, dans lequel les informations du motif à projeter comprennent la priorité du motif à projeter ;
comparer la priorité de l'autre motif à projeter à celle du motif en cours de projection ; si la priorité de l'autre motif à projeter est plus haute que celle du motif en cours de projection, interrompre la projection du motif en cours de projection, et projeter l'autre motif à projeter.

8. Procédé (100) selon la revendication 1 ou la revendication 2, dans lequel les phares de véhicule (201) sont configurés pour projeter au moins deux motifs au même moment ; et le procédé (100) comprend en outre les étapes consistant à :
recevoir des informations d'un autre motif à projeter, dans lequel les informations du motif à projeter comprennent une priorité et une position de projection du motif à projeter ;
déterminer la position de projection de l'autre motif à projeter ;
en réponse au fait que le motif en cours de projection a été projeté sur la position de projection de l'autre motif à projeter, comparer la priorité de l'autre motif à projeter à celle du motif en cours de projection ; si la priorité de l'autre motif à projeter est plus haute que celle du motif en cours de projection, interrompre la projection du motif en cours de projection, et projeter l'autre motif à projeter.

9. Système d'éclairage de véhicule (200), comprenant :
des phares de véhicule (201) configurés pour projeter des types de motif différents de motifs à l'avant des phares de véhicule (201), et
un dispositif de commande de phares de véhicule (202) couplé aux phares de véhicule (201) et configuré pour mettre en œuvre le procédé (100) selon l'une quelconque des revendications 1 à 8 pour commander les motifs projetés par les phares de véhicule (201).

10. Véhicule, comprenant le système d'éclairage de véhicule (200) selon la revendication 9.

11. Support d'informations lisible par machine, qui maintient des instructions utilisées pour permettre à une machine de mettre en œuvre le procédé (100) d'utilisation de phares de véhicule (201) pour projeter un motif selon l'une quelconque des revendications 1 à 8.

12. Unité centrale de traitement (CPU), utilisée pour exécuter un programme pour mettre en œuvre le procédé (100) d'utilisation d'un phare de véhicule pour projeter un motif selon l'une quelconque des revendications 1 à 8.
